# FASCICULE DE BREVET EUROPEEN

(11) **EP 2 008 747 B1**
(45) Date de publication et mention de la délivrance du brevet: **05.05.2010**
(21) Numéro de dépôt: 07111069.6
(22) Date de dépôt: 26.06.2007
(51) Int. Cl.: B23B 31/20

(54) **Dispositif de maintien par pince à portée conique à déformation maîtrisée**
Vorrichtung zum Halten mittels konischer Trageklammer mit kontrollierter Verformung
Device for supporting by a clamp with conical seating with controlled deformation

(43) Date de publication de la demande: 31.12.2008
(73) Titulaire: Tornos SA, 2740 Moutier (CH)
(72) Inventeur: Faivre, Bertrand, 2740 Moutier (CH); Andriani, Luciano, 1007 Lausanne (CH)
(74) Mandataire: BOVARD AG

(56) Documents cités:
- WO-A-93/14897
- US-A- 3 041 078
- US-B1- 6 280 126
- US-B1- 6 371 705

## Description

L'invention se rapporte à un dispositif de maintien par pince à portée conique pour le maintien par serrage d'un élément dans un appareil rotatif d'une machine-outil (cf. p. ex. US 3 041 078).

Plus après, on désigne le dispositif de maintien par pince à portée conique, par l'expression dispositif de maintien.

Les éléments à maintenir par serrage sont en général des éléments cylindriques de matériau à usiner, mais le terme élément peut également désigner un outil d'usinage comportant, pour son maintien par serrage, une zone cylindrique, appelée portion cylindrique de préhension.

L'invention s'applique plus particulièrement, mais non exclusivement, à un dispositif de maintien, pour broche de machine de décolletage.

Dans le cas d'une machine de décolletage, l'élément à maintenir est un élément cylindrique de matériau à usiner, et, par exemple, une barre de matériau, un segment d'une telle barre, voire, un produit déjà partiellement obtenu par usinage dans un tel segment de barre.

De manière connue, un appareil rotatif de machine de décolletage consiste en un ensemble tubulaire allongé qui coopère avec des moyens de guidage en rotation et d'entraînement en rotation supportés par un ensemble stable de la machine, tel le bâti de cette machine.

Le dispositif de maintien est situé au niveau d'une des deux extrémités opposées de l'appareil rotatif et comprend :
un premier organe allongé qui, appelé pince,
   - est extérieurement délimité, d'une part, longitudinalement, par deux faces extrêmes opposées appelées première face et seconde face et, d'autre part, radialement, par une face de révolution qui, appelée troisième face, constitue, au moins une portée de forme conique qui, appelée première portée, d'une part, s'étend entre deux distances qui, mesurables depuis la première face extrême de la pince sont appelées première distance, pour la plus courte, et seconde distance, pour la plus longue, et, d'autre part, doit participer au centrage, au positionnement axial de la pince dans l'appareil rotatif de la machine-outil ainsi qu'à la production d'une action de serrage sur l'élément à maintenir, et
   - est longitudinalement traversé par un canal délimité par une face qui, appelée quatrième face, constitue au moins une portée de forme cylindrique qui, appelé seconde portée, s'étend à l'intérieur du canal, depuis la première face de la pince, sur une distance prédéterminée, appelée troisième distance, mesurée depuis ladite première face, et doit participer au maintien par serrage de l'élément,
   - est déformable entre deux états dont, d'une part, un état contracté dans lequel la seconde portée est en position d'appui énergique autour de la portion cylindrique de préhension d'un élément qui est engagé dans le canal sur une distance prédéterminée, appelée quatrième distance, mesurée entre la face extrême de cet élément et la première face de la pince et, d'autre part, un état relâché dans lequel ladite seconde portée est en position écartée de ladite portion cylindrique de préhension,
      - un moyen fonctionnel d'actionnement de la pince entre les deux états que sont l'état contracté et l'état relâché, et ce, par application d'actions de contraction et de relâchement au niveau de la portée conique, appelée première portée, qu'elle comprend.

L'expression "face extrême" désigne aussi une face dont l'étendue géométrique peut être très limitée, c'est-à-dire :
- consister en une face annulaire de largeur relativement réduite, comme cela est le cas lorsque la portion cylindrique de préhension est épaulée, c'est-à-dire se prolonge par un téton de diamètre voisin, mais inférieur à celui de ladite portion cylindrique de préhension, voire
- consister en une face annulaire de largeur limitée à une ligne circulaire, comme cela est le cas lorsque la portion cylindrique de préhension se prolonge, sans réelle solution de continuité, par exemple par une excroissance de forme conique.

En général, la seconde portée à une section transversale ajustée à celle de l'élément à maintenir et la déformation que la pince doit subir pour passer de l'état contracté à l'état relâché est très faible, par exemple de l'ordre du dixième de millimètre.

La pince est en général constituée en métal et comprend au moins une découpe et de préférence une pluralité de découpes, telles des fentes radiales, qui lui donnent une certaine déformabilité radiale au niveau de la première portée, de manière telle qu'elle soit déformable entre deux états dont, d'une part, l'état contracté dans lequel la quatrième face est en position d'appui énergique autour de la portion cylindrique de préhension d'un élément à maintenir et, d'autre part, l'état relâché dans lequel ladite quatrième face est en position écartée de ladite portion cylindrique de préhension.

Le moyen fonctionnel d'actionnement comprend un ensemble mécanique comportant :
- une portée conique femelle, appelé troisième portée, destinée à coopérer avec la première portée de la pince,
- un organe moteur destiné à produire des actions mécaniques pour, sélectivement, solliciter énergiquement la troisième portée contre la première portée de la pince ou, au contraire, écarter ladite troisième portée de ladite première portée,
- au moins une butée disposée pour coopérer axialement avec la pince de manière à entraver son déplacement axial lorsque l'organe moteur produit l'une de ses actions mécaniques.

Ces dispositifs de serrage sont connus de longue date et il en existe de très nombreuses variantes.

Les utilisateurs reprochent à ces dispositifs de générer, lors du passage de la pince entre l'état relâché et l'état contracté, un déplacement axial de l'élément à maintenir, essentiellement lorsque cet élément est partiellement engagé dans la pince, c'est-à-dire, plus particulièrement mais non exclusivement, lorsque que l'élément à maintenir est engagé sur une quatrième distance qui est de valeur inférieure à la seconde distance, à savoir, de valeur inférieure à la distance qui détermine la limite de la portée conique la plus éloignée de la première face de la pince.

La valeur du déplacement est assurément très faible, notamment de quelques centièmes de millimètres, mais elle est suffisante pour altérer la géométrie de l'élément à maintenir, particulièrement la géométrie d'une face extrême de cet élément, telle une face obtenue lors d'une opération de tronçonnage d'une barre de matériau maintenue entre une broche et une contre-broche et dans laquelle ledit élément doit être prélevé après avoir subi une première série d'usinage.

Un résultat que l'invention vise à obtenir est un dispositif de maintien du type précité qui ne génère pas le déplacement axial connu.

A cet effet, l'invention a pour objet un dispositif selon la revendication 1.

L'invention sera bien comprise à la lecture de la description ci-après faite à titre d'exemple non limitatif en regard du dessin ci-annexé qui représente schématiquement :

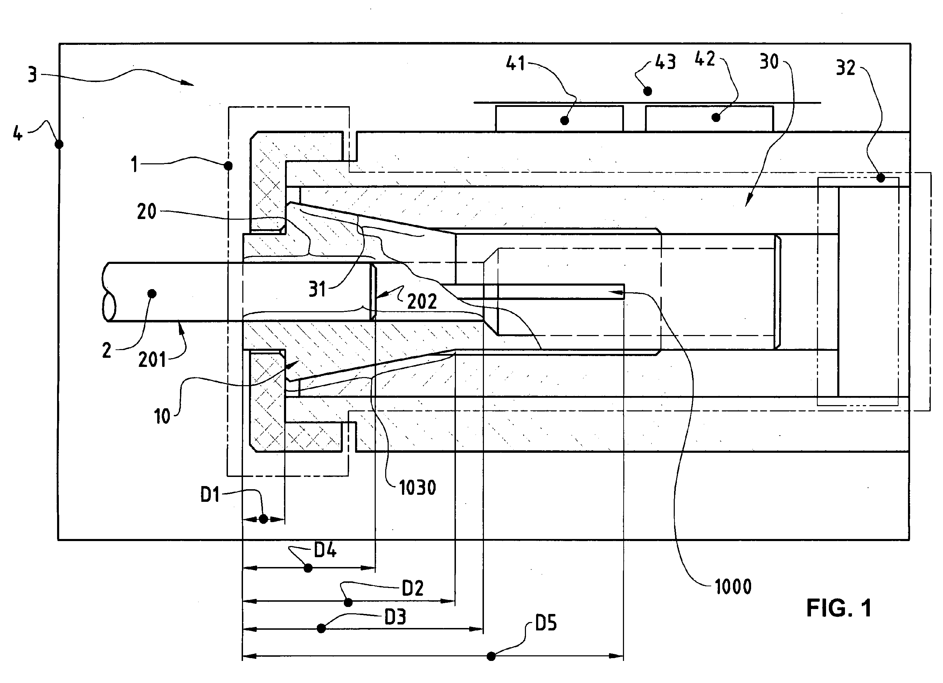

- figure 1, vue localement et une coupe longitudinale partielle, un appareil rotatif de machine-outil comportant un dispositif de maintien par serrage de l'état de la technique,
- figure 2, une vue de face d'une pince utilisée dans un dispositif de maintien par serrage,

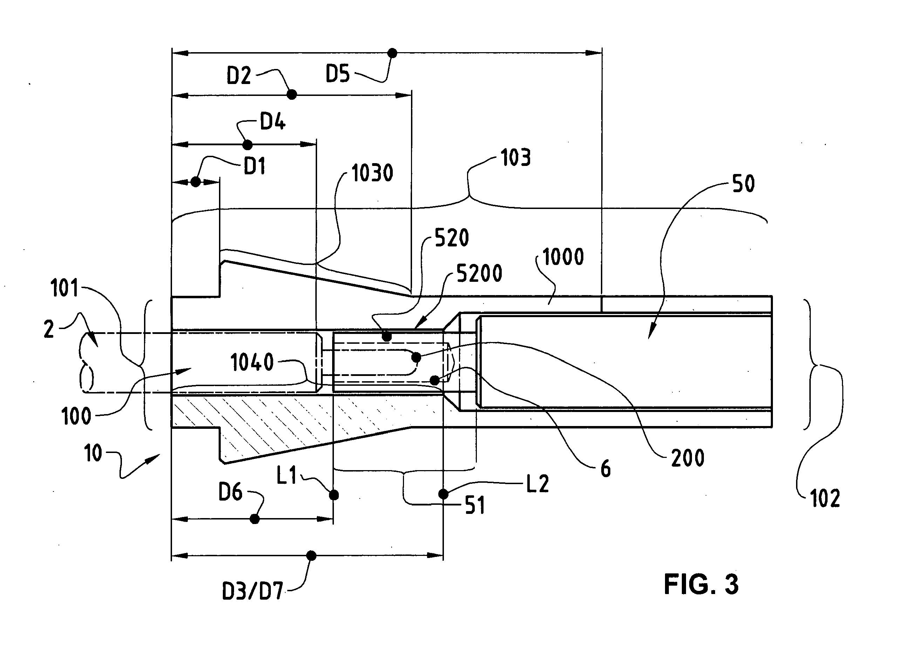

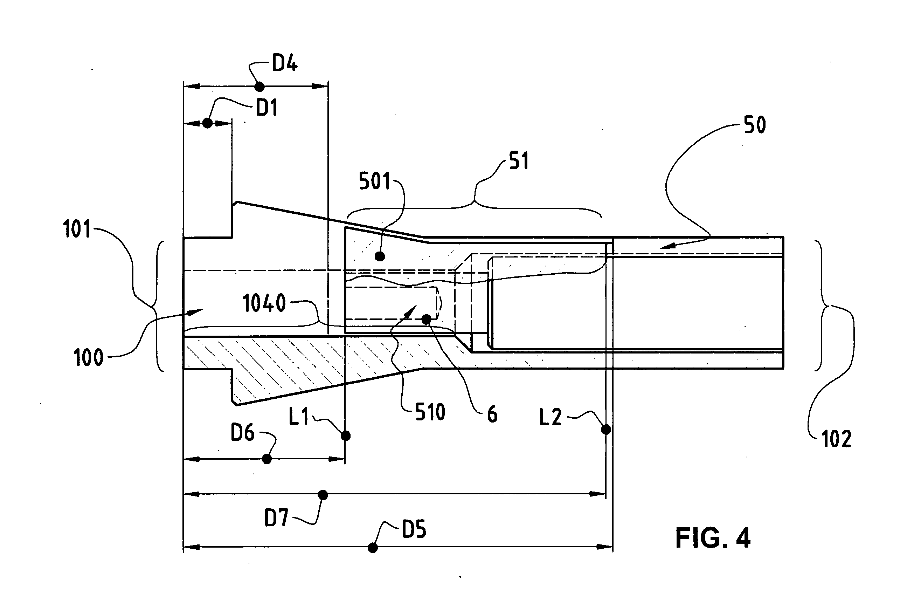

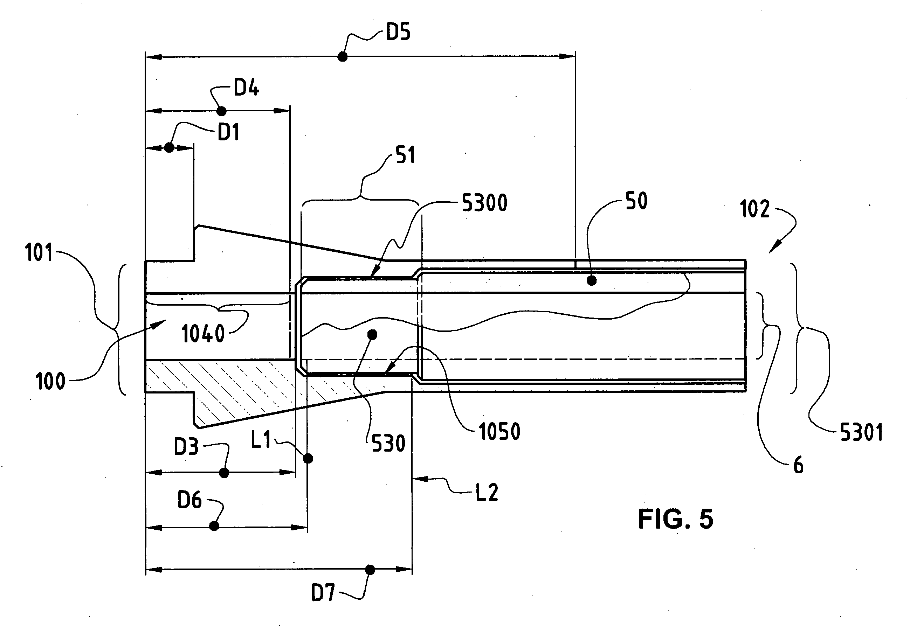

- figures 3 à 5, à plus grande échelle, une vue en coupe longitudinale partielle d'un dispositif de maintien par serrage selon trois modes de réalisation de l'invention,
- figure 6, à plus grande échelle, une vue de face du mode de réalisation de la figure 4.

En se reportant au dessin, on voit dispositif de maintien 1 pour le maintien par serrage d'un élément 2 dans un appareil rotatif 3 d'une machine-outil 4.

L'élément 2 à maintenir par serrage peut être un segment d'une barre de matériau à usiner, mais le terme élément 2 peut également désigner un outil d'usinage comportant une portion de forme cylindrique pour son maintien par serrage (ce dernier cas d'un outil n'est pas représenté).

Lorsque la machine-outil 4 consiste en une machine de décolletage, l'élément 2 à maintenir est un élément cylindrique de matériau à usiner, et, par exemple, un segment d'une barre de matériau, voire, un produit déjà partiellement obtenu par usinage dans un tel segment de barre.

Quoiqu'il en soit, l'élément 2 à maintenir par serrage comporte une portion cylindrique de préhension 20, cette portion étant délimitée au moins par une face radiale cylindrique 201 et une face extrême 202.

Il faut noter qu'au sens de la présente demande de brevet, la face extrême 202 qui délimite longitudinalement la portion cylindrique de préhension 20 peut être la face terminale de l'élément 2, mais ne l'est pas obligatoirement.

En effet, l'élément 2 peut se prolonger bien au-delà de la face extrême 202 par une excroissance 200 de section transversale moindre et, par exemple, tel que cela est représenté, par un simple téton cylindrique.

Tel que cela a déjà été indiqué, l'expression "face extrême" désigne aussi une face dont l'étendue géométrique peut être très limitée, c'est-à-dire :
- consister en une face annulaire de largeur relativement réduite, comme cela est le cas lorsque la portion cylindrique de préhension 20 est épaulée, c'est-à-dire se prolonge par un téton de diamètre voisin, mais inférieur à celui de ladite portion cylindrique de préhension 20, voire
- consister en une face annulaire de largeur limitée à une ligne circulaire, comme cela est le cas lorsque la portion cylindrique de préhension 20 se prolonge, sans réelle solution de continuité, par exemple par une excroissance de forme conique.

Un appareil rotatif 3 d'une machine-outil 4, telle une machine-outil de décolletage, consiste en un ensemble allongé, notamment tubulaire, qui coopère avec des moyens de guidage en rotation 41 et des moyens d'entraînement en rotation 42 supportés par un ensemble stable de cette machine-outil 4, tel le bâti 43 de ladite machine-outil 4.

Le dispositif de maintien 1 est situé au niveau d'une des deux extrémités opposées de l'appareil rotatif 3 et comprend :
un premier organe allongé qui, appelé pince 10,
   - est extérieurement délimité, d'une part, longitudinalement, par deux faces extrêmes opposées appelées première face 101 et seconde face 102 et, d'autre part, radialement, par une face de révolution qui, appelée troisième face 103, constitue, au moins une portée de forme conique qui, appelée première portée 1030, d'une part, s'étend entre deux distances qui mesurables depuis la première face 101 sont appelées première distance D1, pour la plus courte, et seconde distance D2, pour la plus longue, et, d'autre part, doit participer au centrage, au positionnement axial de la pince 10 dans l'appareil rotatif 3 de la machine-outil 4 ainsi qu'à la production d'une action de serrage sur l'élément 2 à maintenir, et
   - est longitudinalement traversé par un canal 100 délimité par une face qui, appelée quatrième face 104, constitue au moins une portée de forme cylindrique qui, appelé seconde portée 1040, s'étend à l'intérieur du canal 100, depuis la première face 101 de la pince 10, sur une distance prédéterminée, appelée troisième distance D3, mesurée depuis ladite première face 101, et doit participer au maintien par serrage de l'élément 2,
   - est déformable entre deux états dont, d'une part, un état contracté dans lequel la seconde portée 1040 est en position d'appui énergique autour de la portion cylindrique de préhension 20 d'un élément 2 qui est engagé dans le canal 100 sur une distance prédéterminée, appelée quatrième distance D4, mesurée entre la face extrême 202 de cet élément 2 et la première face 101 de la pince 10 et, d'autre part, un état relâché dans lequel ladite seconde portée 1040 est en position écartée de ladite portion cylindrique de préhension 20,
      - un moyen fonctionnel 30 d'actionnement de la pince entre les deux états que sont l'état contracté et l'état relâché, et ce, par application d'actions de contraction et de relâchement au niveau de la portée conique, appelée première portée 1030, qu'elle comprend.

Sur le dessin, on a représenté une pince avec une seconde portée 1040 qui est de forme cylindrique de révolution, mais cela n'est pas limitatif pour l'invention.

La pince 10 est généralement constituée en métal.

Le moyen fonctionnel 30 d'actionnement comprend un ensemble mécanique comportant :
- une portée conique femelle, appelé troisième portée 31, destinée à coopérer avec la première portée 1030 de la pince 10,
- un organe moteur 32 destinée à produire des actions mécaniques pour, sélectivement, solliciter énergiquement la troisième portée 31 contre la première portée 1030 de la pince 10 ou, au contraire, écarter ladite troisième portée 31 de ladite première portée 1030,
- au moins une butée disposée pour coopérer axialement avec la pince 10 de manière à entraver son déplacement axial lorsque l'organe moteur 32 produit l'une de ses actions mécaniques.

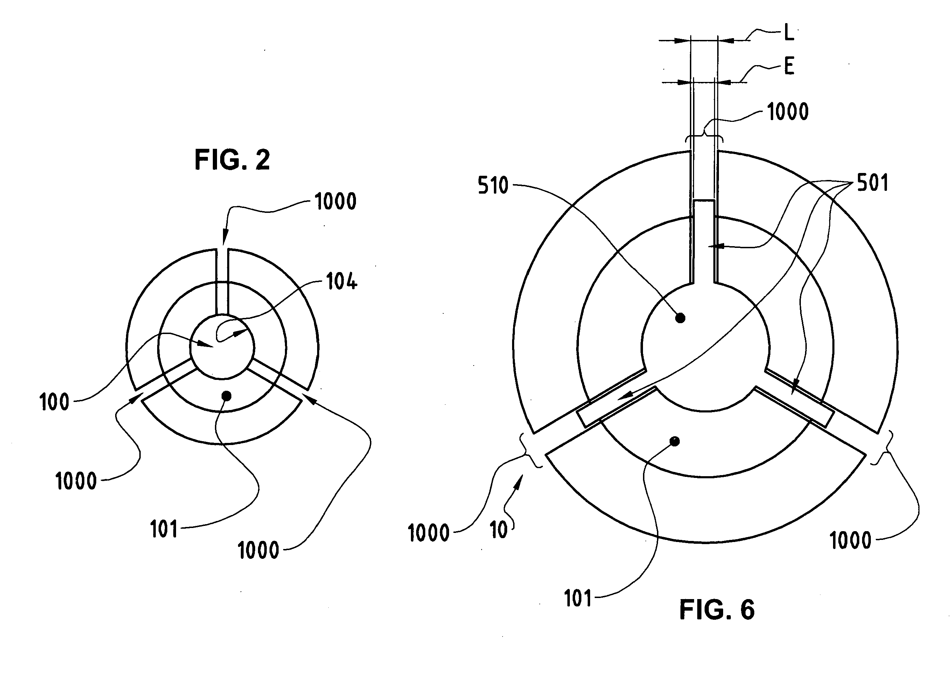

Tel que cela apparaît notamment en figure 2, la pince 10 comprend au moins une découpe 1000 de largeur L prédéterminée, qui lui donne une certaine déformabilité radiale au niveau de la première portée 1030, de manière telle qu'elle soit déformable entre deux états dont, d'une part, l'état contracté dans lequel la quatrième face 104 est en position d'appui énergique autour de la portion cylindrique de préhension 20 d'un élément 2 à maintenir, lorsque cette dernière est engagée dans le canal 100 sur une quatrième distance D4 et, d'autre part, l'état relâché dans lequel ladite quatrième face 104 est en position écartée de ladite portion cylindrique de préhension 20.

Chaque découpe 1000 est de largeur déterminée L et s'étend depuis la première face 101 de la pince 10 en direction de la seconde face 102 de ladite pince 10, et ce, sur une distance qui, appelée cinquième distance D5, a une valeur supérieure à la valeur de la seconde distance D2.

De manière remarquable, le dispositif étant comprend un autre organe allongé qui, appelé second organe 50, est situé dans la pince 10 et comprend au moins une partie qui, appelée première partie 51, est destinée à limiter à une valeur prédéterminée la contraction radiale de la pince 10, et ce, dans une zone qui s'étend entre :
- une première limite longitudinale L1 située à une distance de la première face 101 de la pince 10 qui, appelée sixième distance D6, a une valeur comprise entre la valeur de la cinquième distance D5 et la valeur de la quatrième distance D4, et
- une seconde limite longitudinale L2 située à une autre distance de la première face 101 qui, appelée septième distance D7, a une valeur prédéterminée.

De manière notable la une première limite longitudinale L1 située à une distance de la première face 101 de la pince 10 qui, appelée sixième distance D6, a une valeur inférieure à la valeur de la seconde distance D2.

L'homme de l'art est à même de déterminer la valeur limite de la contraction radiale de la pince 10.

A titre indicatif, cette valeur limite de contraction radiale peut être nulle.

Ces particularités techniques permettent de s'opposer localement la déformation de la pince 10 et, en quelque sorte, d'entraver un mouvement de contraction locale de la pince 10 au delà de la face extrême 202 de l'élément 2 à maintenir, et ce, sur une distance prédéterminée, c'est-à-dire sans entraver la déformation élastique de la pince 10 au delà de la quatrième distance D4, vers la seconde face de ladite pince 10.

La contraction locale de la pince delà de la face extrême 202 étant entravée par la première partie du second organe 50, cela supprime le déplacement axial de l'élément 2 à maintenir que l'on constate lorsque la pince 10 passe de l'état contracté à l'état relâché et réciproquement.

De manière notable, la septième distance D7 qui sépare la seconde limite longitudinale L2 de la première face 101, a une valeur supérieure à la seconde distance D2.

De manière notable, la septième distance D7 est sensiblement égale à la troisième distance D3.

De manière connue (figures 2 et 6) les découpes 1000 constituées par les fentes radiales sont au nombre de trois et sont situées dans trois plans disposés à intervalles angulaires de cent vingt degrés (120 degrés).

Selon un premier mode de réalisation, la première partie 51 du second organe 50 comporte au moins une lame 501 constituée en matériau résistant à la compression et dont l'épaisseur E est ajustée en fonction de la largeur des découpes 1000 de manière à autoriser son insertion dans l'une de ces découpes 1000.

L'homme de l'art est à même de déterminer l'épaisseur E de chaque lame 501 pour obtenir le résultat visé par l'invention.

De manière notable, la première partie 51 du second organe 50 comprend autant de lames 501 que de découpes 1000 prévues dans la pince 10 et, pour porter ces lames 501, au moins une pièce qui, appelée première pièce 510, est engagée dans le canal 100 de cette pince 10.

L'intérêt de ces particularités techniques réside dans le fait qu'elles n'obligent à aucune modification de la pince 10.

Les pinces normalisées peuvent donc être utilisées avec le second organe 50 réalisé selon le premier mode décrit ci-dessus.

De manière remarquable (mais non représentée), la première pièce 510 comprend un passage axial 6 dont la section transversale est de forme et de dimensions convenables pour autoriser le libre engagement d'une excroissance 200 de élément 2 à maintenir qui s'étend au-delà de la face extrême 202.

Conformément à un second mode de réalisation, la première partie 51 du second organe 50 comporte une pièce cylindrique qui, appelée seconde pièce 520, est engagée dans le canal 100 de la pince 10 et présente une surface périphérique de soutien, qui appelée première surface de soutien 5200, est destinée à coopérer localement avec la seconde portée 1040.

De manière notable, la seconde pièce 520 comprend un passage axial 6 dont la section transversale est de forme et de dimensions convenables pour autoriser le libre engagement d'une excroissance 200 de élément 2 à maintenir qui s'étend au-delà de la face extrême 202.

L'intérêt de ces particularités techniques réside dans le fait qu'elles n'obligent à aucune modification de la pince 10.

Suivant un troisième mode de réalisation :
- le canal 100 de la pince 10 comprend une portée qui, appelée quatrième portée 1050, jouxte la seconde portée 1040 et est de section transversale plus étendue que cette seconde portée 1040, et
- la première partie 51 du second organe 50 comporte une pièce qui, appelée troisième pièce 530, présente une surface périphérique de soutien qui appelée seconde surface de soutien 5300 est destinée à coopérer avec la quatrième portée 1050 de manière à assurer une fonction de soutien de cette quatrième portée 1050 afin de limiter la contraction radiale de la pince 10 à une valeur prédéterminée.

Ces particularités techniques permettent d'offrir la possibilité d'aménager un passage axial 6 dans la troisième pièce 530, particulièrement lorsque l'élément 2 à maintenir occupe une fraction importante de la section transversale de la pince 10.

Selon une variante de réalisation de ce troisième mode de réalisation, la troisième pièce 530 comprend un passage axial 6 dont la section transversale est au moins équivalente à la section transversale de la seconde portée 1040.

De manière notable, le second organe 50 s'étend dans le canal 100 de la pince 10, sensiblement jusqu'au niveau de la seconde face extrême 102 de ladite pince 10.

Ces particularités techniques permettent de garantir que le second organe 50 reste maintenu en position dans la pince 10 dans la mesure où un obstacle situé au niveau de la seconde face 102 de la pince 10 s'oppose à sa translation.

## Revendications

1. Dispositif de maintien (1) pour le maintien par serrage d'un élément (2) dans un appareil rotatif (3) d'une machine-outil (4), l'élément (2) à maintenir par serrage comportant une portion cylindrique de préhension (20), cette portion étant délimitée au moins par une face radiale cylindrique (201) et une face extrême (202), le dispositif de maintien (1) comprenant :
un premier organe allongé qui, appelé pince (10),
• est extérieurement délimité, d'une part, longitudinalement, par deux faces extrêmes opposées appelées première face (101) et seconde face (102) et, d'autre part, radialement, par une face de révolution qui, appelée troisième face (103), constitue, au moins une portée de forme conique qui, appelée première portée (1030), d'une part, s'étend entre deux distances qui mesurables depuis la première face (101) sont appelées première distance (D1), pour la plus courte, et seconde distance (D2), pour la plus longue, et, d'autre part, doit participer au centrage, au positionnement axial de la pince (10) dans l'appareil rotatif (3) de la machine-outil (4) ainsi qu'à la production d'une action de serrage sur l'élément (2) à maintenir, et
• est longitudinalement traversé par un canal (100) délimité par une face qui, appelée quatrième face (104), constitue au moins une portée de forme cylindrique qui, appelé seconde portée (1040), s'étend à l'intérieur du canal (100), depuis la première face (101) de la pince (10), sur une distance prédéterminée, appelée troisième distance (D3), mesurée depuis ladite première face (101), et doit participer au maintien par serrage de l'élément (2),
• comprend au moins une découpe (1000) qui, de largeur déterminée (L) et s'étendant depuis la première face (101) de la pince (10) en direction de la seconde face (102) de ladite pince (10), sur une distance qui, appelée cinquième distance (D5), a une valeur supérieure à la valeur de la seconde distance (D2), donne à la pince (10) une certaine déformabilité radiale au niveau de la première portée (1030), de manière telle qu'elle soit déformable entre deux états dont, d'une part, un état contracté dans lequel la seconde portée (1040) est en position d'appui énergique autour de la portion cylindrique de préhension (20) d'un élément (2) qui est engagé dans le canal (100) sur une distance prédéterminée, appelée quatrième distance (D4), mesurée entre la face extrême (202) de cet élément (2) et la première face (101) de la pince (10) et, d'autre part, un état relâché dans lequel ladite seconde portée (1040) est en position écartée de ladite portion cylindrique de préhension (20),
- un moyen fonctionnel (30) d'actionnement de la pince entre les deux états que sont l'état contracté et l'état relâché, et ce, par application d'actions de contraction et de relâchement au niveau de la portée conique, appelée première portée (1030), qu'elle comprend,
ce dispositif étant **caractérisé en ce qu'**il comprend un autre organe allongé qui, appelé second organe (50), est situé dans la pince (10) et comprend au moins une partie qui, appelée première partie (51), est destinée à limiter à une valeur prédéterminée la contraction radiale de la pince (10), et ce, dans une zone qui s'étend entre :
- une première limite longitudinale (L1) située à une distance de la première face (101) de la pince (10) qui, appelée sixième distance (D6), a une valeur comprise entre la valeur de la cinquième distance (D5) et la valeur de la quatrième distance (D4), et
- une seconde limite longitudinale (L2) située à une autre distance de la première face (101) qui, appelée septième distance (D7), a une valeur prédéterminée.

2. Dispositif selon la revendication 1, **caractérisé en ce que** la sixième distance (D6) qui sépare la première limite longitudinale (L1) de la première face (101) de la pince (10), a une valeur inférieure à la valeur de la seconde distance (D2).

3. Dispositif selon la revendication 1 ou 2, **caractérisé en ce que** la septième distance (D7) qui sépare la seconde limite longitudinale (L2) de la première face (101), a une valeur supérieure à la seconde distance (D2).

4. Dispositif selon l'une quelconque des revendications 1 à 3, **caractérisé en ce que** la septième distance (D7) est sensiblement égale à la troisième distance (D3).

5. Dispositif selon l'une quelconque des revendications 1 à 4 **caractérisé en ce que** la première partie (51) du second organe (50) comporte au moins une lame (501) constituée en matériau résistant à la compression et dont l'épaisseur (E) est ajustée en fonction de la largeur des découpes (1000) de manière à autoriser son insertion dans l'une de ces découpes (1000).

6. Dispositif selon la revendication 5, **caractérisé en ce que** la première partie (51) du second organe (50) comprend autant de lames (501) que de découpes (1000) prévues dans la pince (10) et, pour porter ces lames (501), au moins une pièce qui, appelée première pièce (510), est engagée dans le canal (100) de cette pince (10).

7. Dispositif selon l'une quelconque des revendications 1 à 6, **caractérisé en ce que** la première pièce (510) comprend un passage axial (6) dont la section transversale est de forme et de dimensions convenables pour autoriser le libre engagement d'une excroissance (200) de élément (2) à maintenir qui s'étend au-delà de la face extrême (202).

8. Dispositif selon l'une quelconque des revendications 1 à 7, **caractérisé en ce que** la première partie (51) du second organe (50) comporte une pièce cylindrique qui, appelée seconde pièce (520), est engagée dans le canal (100) de la pince (10) et présente une surface périphérique de soutien, qui appelée première surface de soutien (5200), est destinée à coopérer localement avec la seconde portée (1040).

9. Dispositif selon la revendication 8, **caractérisé en ce que** la seconde pièce (520) comprend un passage axial (6) dont la section transversale est de forme et de dimensions convenables pour autoriser le libre engagement d'une excroissance (200) de élément (2) à maintenir qui s'étend au-delà de la face extrême (202).

10. Dispositif selon l'une quelconque des revendications 1 à 9, **caractérisé en ce que** le canal (100) de la pince (10) comprend une portée qui, appelée quatrième portée (1050), jouxte la seconde portée (1040) et est de section transversale plus étendue que cette seconde portée (1040), et
- la première partie (51) du second organe (50) comporte une pièce qui, appelée troisième pièce (530), présente une surface périphérique de soutien qui appelée seconde surface de soutien (5300) est destinée à coopérer avec la quatrième portée (1050) de manière à assurer une fonction de soutien de cette quatrième portée (1050) afin de limiter la contraction radiale de la pince (10) à une valeur prédéterminée.

11. Dispositif selon la revendication 10, **caractérisé en ce que** la troisième pièce (530) comprend un passage axial (6) dont la section transversale est au moins équivalente à la section transversale de la seconde portée (1040).

12. Dispositif selon l'une quelconque des revendications 1 à 11, **caractérisé en ce que** le second organe s'étend dans le canal (100) de la pince (10), sensiblement jusqu'au niveau de la seconde face (102) de ladite pince (10).

## Claims

1. Holding device (1) for holding by clamping of an element (2) in a rotary apparatus (3) of a machine tool (4), the element (2) to be held by clamping comprising a cylindrical gripping portion (20), this portion being delimited at least by a radial cylindrical face (201) and an end face (202), the holding device (1) comprising :
a first elongated member which, referred to as clamp (10),
• is externally delimited, on the one hand, longitudinally, by two opposite end faces referred to as first face (101) and second face (102), and, on the other hand, radially, by a revolving face, which, referred to as third face (103), constitutes at least one bearing surface of conical shape, referred to as first bearing surface (1030) which, on the one hand, extends between two distances which, measurable from the first face (101), are referred to as first distance (D1), for the shorter, and second distance (D2), for the longer, and, on the other hand, must participate in aligning, for axial positioning of the clamp (10) in the rotary apparatus (3) of the machine tool (4), as well as for producing an action of clamping on the element (2) to be held, and
• is longitudinally traversed by a channel (100) delimited by a face which, referred to as a fourth face (104), constitutes at least one bearing surface of cylindrical shape which, referred to as second bearing surface (1040), extends inside the channel (100), from the first face (101) of the clamp (10), over a predetermined distance, referred to as third distance (D3), measured from said first face (101), and must participate in holding of the element (2) by clamping,
• comprises at least one cut (1000) which, of predetermined width (L) and extending from the first face (101) of the clamp (10) in the direction of the second face (102) of said clamp (10), over a distance which, referred to as fifth distance (D5), has a value greater than the value of the second distance (D2), gives to the clamp (10) a certain radial deformability at the level of the first bearing surface (1030), in such a way that it is deformable between two states, which are, on the one hand, a contracted state in which the second bearing surface (1040) is in a position of forceful pressing around the cylindrical portion of gripping (20) of an element (2) which is engaged in the channel (100) over a predetermined distance, referred to as fourth distance (D4), measured between the end face (202) of this element (2) and the first face (101) of the clamp (10), and, on the other hand, a released state in which said second bearing surface (1040) is in spaced-apart position from said cylindrical gripping portion (20),
- a functional means (30) of actuation of the clamp between the two states which are the state of contraction and the state of release, and this by application of actions of contraction and of release at the level of the conical bearing surface, referred to as first bearing surface (1030), which it comprises,
this device being **characterised in that** it comprises another elongated member which, referred to as second member (50), is situated in the clamp (10) and comprises at least one part which, referred to as first part (51), is intended to limit to a predetermined value the radial contraction of the clamp (10), and this in a zone which extends between:
- a first longitudinal limit (L1) situated at a distance from the first face (101) of the clamp (10) which, referred to as a sixth distance (D6), has a value ranging between the value of the fifth distance (D5) and the value of the fourth distance (D4), and
- a second longitudinal limit (L2) situated at another distance from the first face (101) which, referred to as a seventh distance (D7), has a predetermined value.

2. Device according to claim 1, **characterised in that** the sixth distance (D6), which separates the first longitudinal limit (L1) from the first face (101) of the clamp (10), has a value less than the value of the second distance (D2).

3. Device according to claim 1 or 2, **characterised in that** the seventh distance (D7), which separates the second longitudinal limit (L2) from the first face (101), has a value greater than the second distance (D2).

4. Device according to any one of the claims 1 to 3, **characterised in that** the seventh distance (D7) is substantially equal to the third distance (D3).

5. Device according to any one of the claims 1 to 4, **characterised in that** the first part (51) of the second member (50) comprises at least one blade (501) made up of a material resistant to compression and whose thickness (E) is adapted as a function of the width of the cuts (1000) in such a way as to permit its insertion in one of the cuts (1000).

6. Device according to claim 5, **characterised in that** the first part (51) of the second member (50) comprises as many blades (501) as cuts (1000) provided in the clamp (10) and, for bearing these blades (501), at least one piece which, referred to as first piece (510), is engaged in the channel (100) of this clamp (10).

7. Device according to any one of the claims 1 to 6, **characterised in that** the first piece (510) comprises an axial passage (6), the cross section of which is of suitable form and dimensions to permit the free engagement of a swelling (200) of the element (2) to hold that which extends beyond the end face (202).

8. Device according to any one of the claims 1 to 7, **characterised in that** the first part (51) of the second member (50) comprises a cylindrical piece which, referred to as second piece (520), is engaged in the channel (100) of the clamp (10) and has a peripheral support surface, which, referred to as first support surface (5200), is intended to co-operate locally with the second bearing surface (1040).

9. Device according to claim 8, **characterised in that** the second piece (520) comprises an axial passage (6), the cross section of which is of suitable shape and dimensions to permit the free engagement of a swelling (200) of the element (2) to hold that which extends beyond the end face (202).

10. Device according to any one of the claims 1 to 9, **characterised in that** the channel (100) of the clamp (10) comprises a bearing surface which, referred to as fourth bearing surface (1050), abuts the second bearing surface (1040) and is of wider cross section than this second bearing surface (1040), and
- the first part (51) of the second member (50) comprises a piece which, referred to as third piece (530), has a peripheral support surface which, referred to as second support surface (5300), is intended to co-operate with the fourth bearing surface (1050) in such a way as to ensure a function of support of this fourth bearing surface (1050) in order to limit the radial contraction of the clamp (10) to a predetermined value.

11. Device according to claim 10, **characterised in that** the third piece (530) comprises an axial passage (6), the cross section of which is at least equal to the cross section of the second bearing surface (1040).

12. Device according to any one of the claims 1 to 11, **characterised in that** the second member extends in the channel (100) of the clamp (10), substantially to the level of the second face (102) of said clamp (10).

## Patentansprüche

1. Haltevorrichtung (1) zum Halten durch Festklemmen eines Elements (2) in einem Drehgerät (3) einer Werkzeugmaschine (4), wobei das Element (2) zum Halten durch Festklemmen einen zylindrischen Greifteil (29) umfasst, wobei dieser Teil mindestens durch eine zylindrische radiale Fläche (201) und eine Außenfläche (202) begrenzt ist, wobei die Haltevorrichtung (1) umfasst:
ein erstes längliches Organ, das, genannt Klammer (10),
• äußerlich einerseits in der Längsrichtung durch zwei gegenüberliegende Außenflächen, genannt erste Fläche (101) und zweite Fläche (102), und, andererseits radial durch eine drehende Fläche, die, genannt dritte Fläche (103), mindestens einen Bereich mit konischer Form bildet, der, genannt erster Bereich (1030), sich einerseits zwischen zwei Distanzen erstreckt, die, messbar von der ersten Außenfläche (101), erste Distanz (D1) im Fall der kürzeren, und zweite Distanz (D2) im Fall der längeren, genannt werden, begrenzt ist und andererseits an der Zentrierung, der axialen Positionierung der Klammer (10) im Drehapparat (3) der Werkzeugmaschine (4) sowie an der Erzeugung eines Klemmvorgangs auf dem zu klemmenden Element (2) beitragen muss und
• in der Längsrichtung von einem Kanal (100) durchquert wird, der von einer Fläche begrenzt ist, die, genannt vierte Fläche (104), mindestens einen Bereich mit zylindrischer Form bildet, der, genannt zweiter Bereich (1040), sich im Inneren des Kanals (100), von der ersten Fläche (101) der Klammer (10), auf einer vorbestimmten Distanz, genannt dritte Distanz (D3), gemessen von der ersten Fläche (101) aus erstreckt, und zum Halten durch Festklemmen von Element (2) beitragen muss.
• mindestens einen Schnitt (1000) umfasst, der, mit einer bestimmten Länge (L) und sich von der ersten Fläche (101) der Klammer (10) in Richtung der zweiten Fläche (102) der Klammer (10) erstreckend auf einer Distanz, die, genannt fünfte Distanz (D5), einen Wert aufweist, der höher als der Wert der zweiten Distanz (D2) ist, der Klammer (10) eine bestimmte radiale Verformbarkeit auf der Ebene des ersten Bereichs (1030) verleiht, sodass sie zwischen zwei Zuständen verformbar ist, einerseits einem gespannten Zustand, in dem sich der zweite Bereich (1040) in einer Position der energischen Auflage um den zylindrischen Greifteil (20) eines Elementes (2) befindet, das in den Kanal (100) auf einer vorbestimmten Distanz, genannt vierte Distanz (D4), gemessen zwischen der Außenfläche (202) dieses Elementes (2) und der ersten Fläche (101) der Klammer (10) eingreift, und, andererseits, einem entspannten Zustand, in dem sich der zweite Bereich (1040) in einer Position befindet, in der vom zylindrischen Greifteil (20) entfernt ist.
- ein funktionelles Betätigungselement (30) der Klammer zwischen den zwei Zuständen, d.h. dem gespannten Zustand und dem entspannten Zustand, und dies durch Anwendung von Spannungs- und Entspannungsmaßnahmen auf der Ebene des konischen Bereichs, genannt erster Bereich (1030), der sie enthält,
wobei diese Vorrichtung **dadurch gekennzeichnet ist, dass** sie ein weiteres längliches Organ umfasst, das, genannt zweites Organ (50), sich in der Klammer (10) befindet und mindestens einen Teil umfasst, der, genannt erster Teil (51), vorgesehen ist, um die radiale Spannung der Klammer (10) auf einen vorbestimmten Wert zu begrenzen, und dies in einem Bereich, der sich zwischen folgendem erstreckt:
- einer ersten länglichen Grenze (L1), die sich in einer Distanz von der ersten Fläche (101) der Klammer (10) befindet, die, genannt sechste Distanz (D6), einen Wert aufweist, der zwischen dem Wert der fünften Distanz (D5) und dem Wert der vierten Distanz (D4) liegt, und
- einer zweiten länglichen Grenze (L2), die sich in einer anderen Distanz von der ersten Fläche (101) befindet, die, genannt siebte Distanz (D7), einen vorbestimmten Wert aufweist.

2. Vorrichtung nach Anspruch 1, **dadurch gekennzeichnet, dass** die sechste Distanz (D6), die die erste längliche Grenze (L1) von der ersten Fläche (101) der Klammer (10) trennt, einen Wert aufweist, der geringer als der Wert der zweiten Distanz (D2) ist.

3. Vorrichtung nach Anspruch 1 oder 2, **dadurch gekennzeichnet, dass** die siebte Distanz (D7), die die zweite Längsgrenze (L2) von der ersten Fläche (101) trennt, einen Wert aufweist, der größer als die zweite Distanz (D2) ist.

4. Vorrichtung nach einem der Ansprüche 1 bis 3, **dadurch gekennzeichnet, dass** die siebte Distanz (D7) im Wesentlichen gleich der dritten Distanz (D3) ist.

5. Vorrichtung nach einem der Ansprüche 1 bis 4, **dadurch gekennzeichnet, dass** der erste Teil (51) (51) des zweiten Organs (50) mindestens ein Blatt (501) umfasst, das aus einem Werkstoff besteht, der gegen die Verdichtung widerstandsfähig ist, und dessen Dicke (E) je nach der Breite der Schnitte (1000) angepasst ist, um seine Einfügung in einen dieser Schnitte (1000) zuzulassen.

6. Vorrichtung nach Anspruch 5, **dadurch gekennzeichnet, dass** der erste Teil (51) des zweiten Organs (50) ebenso viele Blätter (501) wie Schnitte (1000) umfasst, die in der Klammer (10) vorgesehen sind und, um diese Blätter (501) zu tragen, mindestens ein Stück das, genannt erstes Stück (501), in den Kanal (100) dieser Klammer (10) eingreift.

7. Vorrichtung nach einem der Ansprüche 1 bis 6, **dadurch gekennzeichnet, dass** das erste Stück (510) einen axiale Durchgang (6) umfasst, dessen Querschnitt eine Form und Abmessungen aufweist, die angemessen sind, um das freie Eingreifen eines Auswuchses (200) des zu haltenden Elements (2) zuzulassen, das sich über die Außenfläche (202) hinaus erstreckt.

8. Vorrichtung nach einem der Ansprüche 1 bis 7, **dadurch gekennzeichnet, dass** der erste Teil (51) des zweiten Organs (50) mindestens ein zylindrisches Stück umfasst, das, genannt zweites Stück (520) in den Kanal (100) der Klammer (10) eingreift und eine periphere Stützfläche darstellt, die, genannt erste Stützfläche (5200), dazu vorgesehen ist, lokal mit dem zweiten Bereich (1040) zusammenzuarbeiten.

9. Vorrichtung nach Anspruch 8, **dadurch gekennzeichnet, dass** das zweite Stück (520) einen axialen Durchgang (6) umfasst, dessen Querschnitt eine Form und Abmessungen aufweist, die angemessen sind, um das freie Eingreifen eines Auswuchses (200) des zu haltenden Elements (2) zuzulassen, das sich über die Außenseite (202) hinaus erstreckt.

10. Vorrichtung nach einem der Ansprüche 1 bis 9, **dadurch gekennzeichnet, dass** der Kanal (100) der Klammer (10) einen Bereich umfasst, der, genannt vierter Bereich (1050), neben dem zweiten Bereich (1040) liegt und einen Querschnitt aufweist, der größer als derjenige des zweiten Bereichs (1040) ist, und
- der erste Teil (51) des zweiten Organs (50) ein Stück umfasst, das, genannt drittes Stück (530), eine periphere Stützfläche darstellt, die, genannt zweite Stützfläche (5300), vorgesehen ist, um mit dem vierten Bereich (1050) so zusammenzuarbeiten, um eine Stutzfunktion dieses vierten Bereichs (1050) sicherzustellen, um die radiale Spannung der Klammer (10) auf einen vorbestimmten Wert zu beschränken.

11. Vorrichtung nach Anspruch 10, **dadurch gekennzeichnet, dass** das dritte Stück (530) einen axialen Durchgang (6) umfasst, dessen Querschnitt mindestens gleich dem Querschnitt des zweiten Bereichs (1040) ist.

12. Vorrichtung nach einem der Ansprüche 1 bis 11, **dadurch gekennzeichnet, dass** sich das zweite Organ im Kanal (100) der Klammer (10) erstreckt, im Wesentlichen bis zur Ebene der zweiten Fläche (102) der Klammer (10).
